# FASCICULE DE BREVET EUROPEEN

(11) **EP 1 130 988 B1**
(45) Date de publication et mention de la délivrance du brevet: **28.05.2003**
(21) Numéro de dépôt: 99956084.0
(22) Date de dépôt: 19.11.1999
(51) Int. Cl.: A47J 27/05

(54) **RECIPIENT DE CUISSON POUR CUISEUR A LA VAPEUR**
KOCHGEFÄSS FÜR EIN DAMPFKOCHGERÄT
COOKING VESSEL FOR STEAMER

(30) Priorité: 19.11.1998 FR 9814736
(43) Date de publication de la demande: 12.09.2001
(73) Titulaire: SEB S.A., 69130 Ecully (FR)
(72) Inventeur: ROSSI, Fabrice, F-21610 Fontaine Française (FR)
(86) Numéro de dépôt international: FR9902840
(87) Numéro de publication internationale: WO00030511

(56) Documents cités:
- EP-A- 0 142 491
- EP-A- 0 788 754
- WO-A-98/29014
- CH-A- 366 137
- FR-A- 2 730 917
- US-A- 2 393 420
- US-A- 3 709 544
- US-A- 4 138 939
- US-A- 5 756 968

## Description

La présente invention est relative à la réalisation d'un récipient de cuisson pour cuiseur à la vapeur, ce dernier comprenant une partie chauffante pour la production de vapeur et un récipient de cuisson composé d'un ou plusieurs éléments disposés les uns sur les autres verticalement sur ladite partie chauffante.

Un cuiseur à la vapeur conforme à l'état de la technique comprend généralement deux parties principales soit la partie chauffante et la partie récipient qui recevra les aliments que l'on souhaite cuire.

La partie chauffante comprend entre autre un récipient d'eau et un corps de chauffe immergé dans cette eau pour la production de vapeur. Celle-ci s'élève pour atteindre le récipient de cuisson. De préférence un récipient récupérateur de jus est placé entre la partie chauffante et le récipient de cuisson.

Le récipient de cuisson comprend au moins un élément de cuisson, composé d'une paroi latérale tubulaire munie de moyens de préhension, par exemple sous forme d'anses, et d'un fond perforé afin de laisser passer la vapeur sur les aliments disposés sur ce fond. La vapeur traverse ainsi le ou les différents éléments de cuisson pour s'échapper par un couvercle muni d'orifices.

Il est souhaitable que la hauteur de l'élément de cuisson soit adaptée à celle des aliments à cuire selon que l'on considère, par exemple, la cuisson d'un poisson ou d'un poulet. Il est également souhaitable que les orifices des fonds de ces éléments aient différentes géométries en fonction du type d'aliment à cuire. Cependant, aussi bien pour des raisons économiques que pour des raisons de place disponible chez les utilisateurs, un compromis doit être fait dans l'offre des éléments de cuisson proposés avec les cuiseurs vapeur vendus actuellement.

Le document WO 98/29014 décrit un récipient de cuisson pour cuiseur à la vapeur, constitué d'au moins un élément de cuisson composé d'une paroi latérale tubulaire et d'un élément amovible ayant un fond perforé. L'élément de cuisson est agencé pour être assemblé avec au moins un élément similaire. L'élément amovible à fond perforé comporte une paroi latérale périphérique s'élevant à partir du fond. La paroi latérale présente en son extrémité supérieure un rebord extérieur prévu pour venir en appui sur une collerette intérieure ménagée dans la partie inférieure du fond de la paroi latérale tubulaire. Deux poignées sont montées mobiles en rotation dans la paroi latérale de l'élément amovible. Les poignées peuvent ainsi être repliées. L'élément amovible peut être disposé dans un plat de service.

Cette réalisation permet d'offrir aux utilisateurs une grande variété d'éléments de cuisson de volumes intérieurs différents dans lesquels l'élément amovible à fond perforé est adapté au type d'aliment à cuire. Toutefois l'extraction de l'élément amovible à fond perforé est malaisée. Durant la cuisson, les poignées reposent sur le rebord de l'élément amovible. Des condensats ou des jus de cuissons sont susceptibles de retomber sur les poignées. Les poignées peuvent être chaudes et sont difficiles à atteindre pour l'utilisateur qui doit les relever pour retirer l'élément amovible à fond perforé. De plus, après avoir retiré cet élément à fond perforé, le transfert des aliments délicats à manipuler après cuisson, tels que les poissons, est difficile à cause du rebord entourant le fond perforé. En outre, l'élément amovible de fond est simplement posé à l'intérieur de la paroi latérale tubulaire.

Il est connu du document CH 366 137 un élément de cuisson comportant un fond perforé, une paroi latérale tubulaire et une poignée amovible. Des orifices adaptés au montage rapide de la poignée sont ménagés dans le fond perforé. Le fond perforé est solidaire de la paroi latérale tubulaire.

Un but de l'invention est de faciliter la manipulation d'un élément de cuisson pour cuiseur à la vapeur.

Un autre but de l'invention est de faciliter la présentation de certains aliments délicats à manipuler après cuisson, tels que les poissons.

Un autre but de l'invention est de faciliter l'extraction du fond amovible.

Ces buts sont atteints avec un élément de cuisson pour cuiseur à la vapeur comportant une paroi latérale tubulaire, un fond perforé, et une poignée amovible, des orifices adaptés au montage rapide de la poignée étant ménagés dans le fond perforé, du fait que le fond perforé est amovible par rapport à la paroi latérale tubulaire et que la poignée comporte deux extrémités présentant chacune une paire de griffes élastiques à bord biseauté, les bords biseautés étant agencés pour coopérer avec les parois des orifices lors de l'insertion des griffes dans lesdits orifices. La poignée peut être montée sur le fond après la cuisson des aliments, ce qui évite à l'utilisateur de se brûler lors du retrait du fond amovible. La préhension de la poignée est facilitée. Une simple insertion des griffes dans les orifices permet de solidariser la poignée avec le fond perforé.

Selon un mode de réalisation, l'élément de cuisson présente une forme allongée et les orifices sont disposés à proximité de la périphérie dans la partie du fond perforé présentant la largeur la plus faible.

Selon un mode de réalisation, la paroi latérale tubulaire comprend sur son pourtour intérieur un épaulement sur lequel vient s'appuyer le fond perforé. L'épaulement peut être annulaire ou présenter des interruptions.

Avantageusement alors, au moins une butée, montée à l'intérieur de la paroi latérale tubulaire, respectivement montée sous le fond perforé, est prévue pour bloquer une languette, montée sous le fond perforé, respectivement à l'intérieur de la paroi latérale tubulaire. Cette disposition permet de solidariser le fond avec les parois latérales, ce qui facilite la manipulation de l'élément de cuisson.

Avantageusement la ou les butées, respectivement la ou les languettes, présente(nt) une face inclinée prévue(s) pour repousser la languette, respectivement la butée, en correspondance, lors de l'insertion du fond perforé dans la paroi latérale tubulaire. Ces dispositions permettent de solidariser le fond avec la paroi latérale tubulaire par simple insertion du fond, sans nécessiter de manoeuvre particulière des languettes. Durant l'utilisation, les forces sont principalement dirigées vers le bas ; c'est pourquoi le fond perforé est introduit par le haut et repose sur l'épaulement. L'assemblage de l'élément de cuisson est ainsi facilité.

Avantageusement alors la butée prévue pour bloquer une ou plusieurs languettes ménagées sous le fond perforé est formée par l'épaulement comportant une face supérieure inclinée prévue pour repousser le rebord extérieur de la ou des languettes. La ou les butées peuvent également être disposées sous l'épaulement ou sous le fond perforé.

Avantageusement encore le fond perforé comporte deux orifices diamétralement alignés avec deux languettes, les languettes étant disposées en périphérie des orifices. Cette disposition facilite l'extraction du fond par simple traction sur la poignée. La traction sur la poignée provoque une flexion du fond qui dégage les languettes de la butée.

Ces buts sont également atteints avec un élément de cuisson pour cuiseur à la vapeur composé d'une paroi latérale tubulaire et d'un fond perforé amovible, la paroi latérale tubulaire comprenant sur son pourtour intérieur un épaulement sur lequel vient s'appuyer le fond perforé, du fait qu'au moins une butée, montée à l'intérieur de la paroi latérale tubulaire, respectivement montée sous le fond perforé, est prévue pour bloquer une languette, montée sous le fond perforé, respectivement à l'intérieur de la paroi latérale tubulaire. Cette disposition permet de solidariser le fond avec les parois latérales, ce qui facilite la manipulation de l'élément de cuisson.

Avantageusement alors la butée prévue pour bloquer une ou plusieurs languettes ménagées sous le fond perforé est formée par l'épaulement comportant une face supérieure inclinée prévue pour repousser le rebord extérieur de la ou des languettes. Une telle configuration permettant de solidariser la paroi latérale tubulaire et le fond amovible est d'une construction particulièrement économique.

Avantageusement le fond perforé est agencé de manière à pouvoir être désolidarisé de la paroi latérale tubulaire par traction sur une poignée montée sur le fond perforé. La poignée peut être fixe ou amovible.

Selon un mode de réalisation le fond perforé comporte deux points de montage de la poignée diamétralement alignés avec deux languettes, les languettes étant disposées en périphérie des points de montage de la poignée. Une telle configuration permet de désolidariser la paroi latérale tubulaire et le fond amovible de manière aisée, la traction sur la poignée entraînant une flexion du fond permettant de dégager les languettes des butées.

Selon un mode de réalisation le fond perforé comporte deux orifices, prévus pour le montage rapide de la poignée amovible.

Avantageusement, le fond perforé comporte sur au moins 1/10^{e} de sa périphérie une zone exempte de paroi latérale supérieure. Cette disposition permet de transférer sur un plat des aliments délicats à manipuler après cuisson, tels que les poissons, en limitant les risques de dissociation.

Avantageusement encore, le fond perforé est formé par une grille exempte de paroi latérale supérieure. On peut alors utiliser une pluralité de grilles amovibles différentes, peu encombrantes. Avec un jeu de grilles adaptées à différents types de cuisson, on peut changer de grille en fonction de la cuisson à réaliser.

Cette disposition permet de réaliser un produit qui est performant sans être encombrant. Des grilles supplémentaires peuvent être envisagées pour faire évoluer le produit. Le remplacement des grilles par le service après vente est facilité. De plus de telles grilles sont flexibles.

Selon un mode de réalisation, le fond perforé et la paroi latérale tubulaire sont réalisés en polycarbonate.

Avantageusement le fond perforé comporte une pluralité d'orifices de forme elliptiques et rondes. Cette disposition a permis de mettre au point une grille dite à "turbo diffusion" présentant une augmentation jusqu'à 25% de la surface de passage de la vapeur par rapport à la surface du fond grâce à la combinaison d'orifices de forme elliptiques et circulaires. Cette disposition permet de faciliter le passage de la vapeur et l'écoulement des jus de cuisson, tout en retenant les aliments. De préférence au moins 15% de la surface du fond perforé est formée par des orifices de passage de vapeur.

L'invention sera mieux comprise à la description détaillée des dessins, pris à titre nullement limitatif, dans lesquels :
- la figure 1 est une vue de deux éléments de cuisson avec leurs grilles,
- la figure 2 illustre, dans sa position de rangement, la poignée pour extraire la grille,
- les figures 3a et 3b illustrent la mise en place de la poignée,
- la figure 4 illustre en coupe une forme de réalisation d'un montage clipsé,
- la figure 5 illustre le récipient avec sa grille "turbo diffusion".

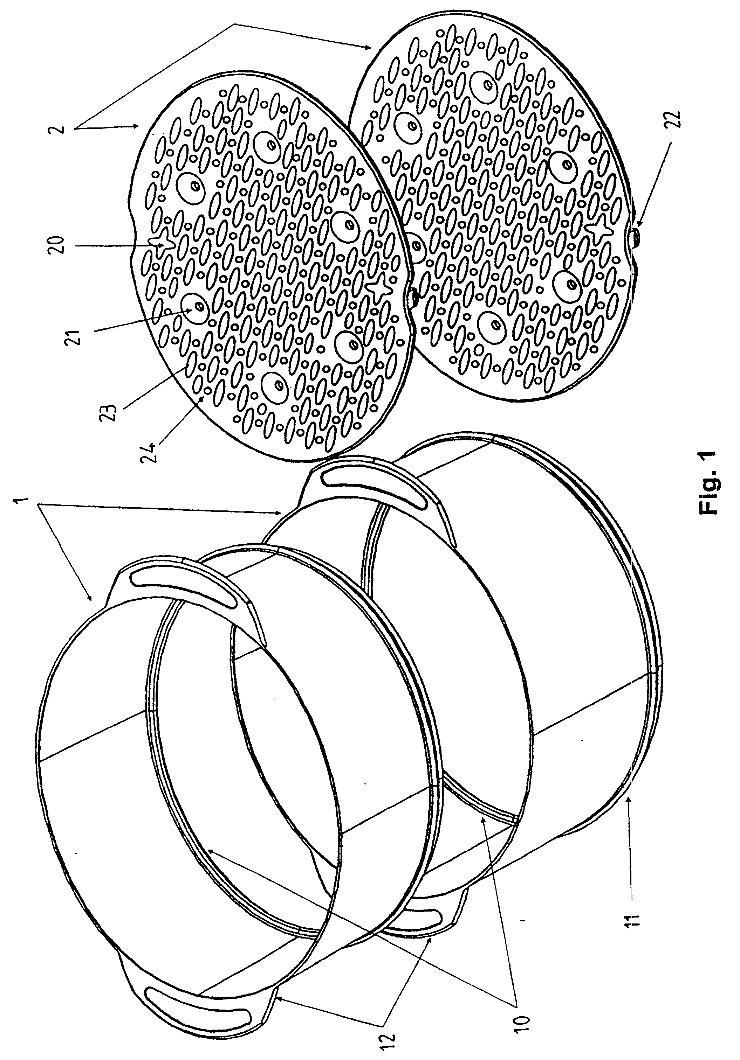

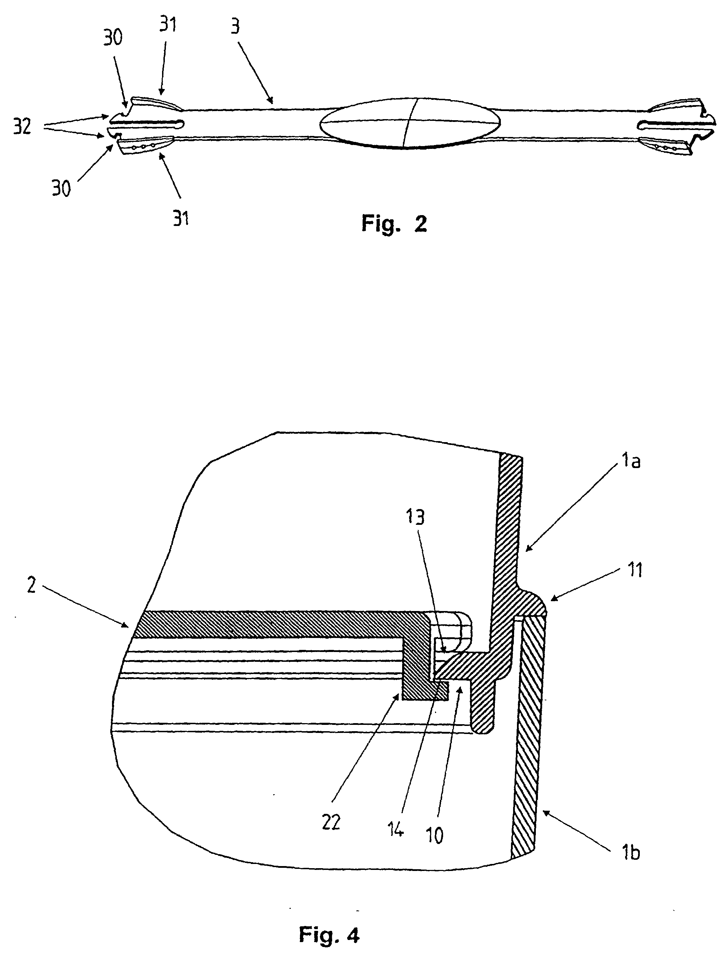

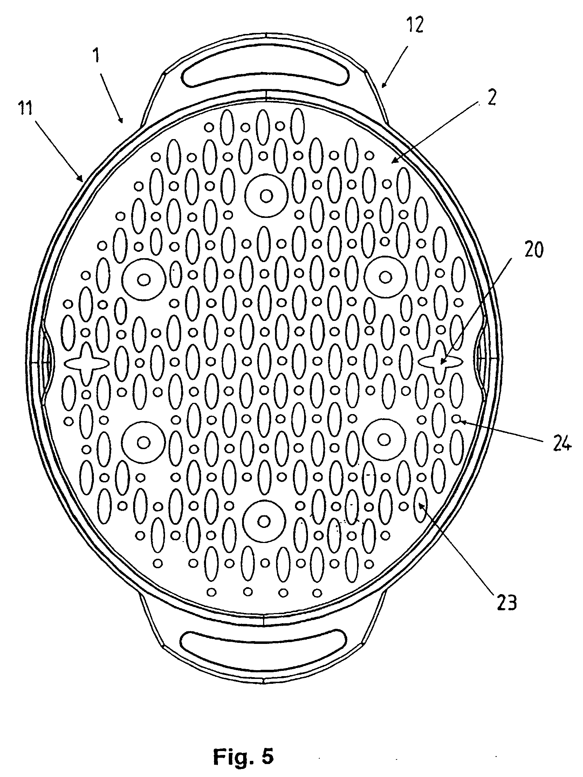

Sur la figure 1 est illustré de manière schématique deux éléments de cuisson, usuellement appelés bols de cuisson, composés des parois latérales tubulaires 1 et des grilles 2. On remarque sur la grille deux orifices 20 de forme particulière adaptés à la réception de la poignée 3 représentée à la figure 2. La vapeur traverse la grille par les orifices 21, 23 et 24 pour atteindre les aliments placés sur celle-ci. On remarque sur la grille 2, une languette de retenue 22 qui vient coopérer avec l'épaulement intérieur 10 faisant saillie à l'intérieur de la paroi 1. De ce fait, cet épaulement sert d'une part de surface de pose sur toute la circonférence de la grille et d'autre part sert à la retenue de cette même grille par la languette 22 qui vient par sa forme en L se placer sous l'épaulement (comme illustré sur la figure 4).

La paroi 1 comporte un épaulement extérieur 11 sur sa surface extérieure qui sert de retenue lors de l'empilement de deux éléments. Les éléments sont de forme légèrement conique afin que le diamètre inférieur extérieur soit légèrement plus petit que le diamètre supérieur intérieur du même élément. De ce fait, les éléments s'emboîtent les uns dans les autres et l'épaulement extérieur 11 de l'élément supérieur vient reposer sur le bord supérieur de l'élément inférieur (représenté en détail à la figure 4).

On comprendra donc que l'on peut utiliser un, deux, voire trois éléments de cuisson superposés pour former un récipient de cuisson à un, deux ou trois compartiments séparés. Mais surtout, on peut empiler sur un élément de cuisson une ou plusieurs parois latérales 1 pour former un récipient de cuisson à une seule chambre de très grand volume susceptible de recevoir par exemple un poulet.

Deux anses 12 servent à la manipulation d'un élément.

La figure 2 montre une vue détaillée de la poignée amovible 3. Celle-ci est représentée dans sa position de rangement car étant composée d'une matière souple, elle est ensuite incurvée pour se placer dans les deux orifices 20 de la grille 2. Lors de l'introduction d'une des extrémités dans la grille 2, les deux griffes 32 viennent en appui sur la face inférieure de la grille 2 et empêchent ainsi la poignée 3 de ressortir. Cette introduction est rendue possible par l'élasticité des deux griffes 32 se contractant au passage de la grille 2. La poignée 3 bénéficie d'une bonne assise grâce à ses deux bords 30 qui viennent se mettre en appui sur la grille 2. Le retrait de la poignée 3 s'effectue par une pression sur les deux flasques 31, rétractant les deux griffes 32 et permettant à l'extrémité de la poignée 3 de traverser la grille 2. Le couvercle du cuiseur (non représenté) aura avantageusement une forme permettant de servir de support sur lequel vient se poser la grille 2. La poignée 3 est dès lors retirée pour permettre une utilisation adéquate, par exemple la présentation d'un poisson disposé sur la grille 2 posée sur ledit support.

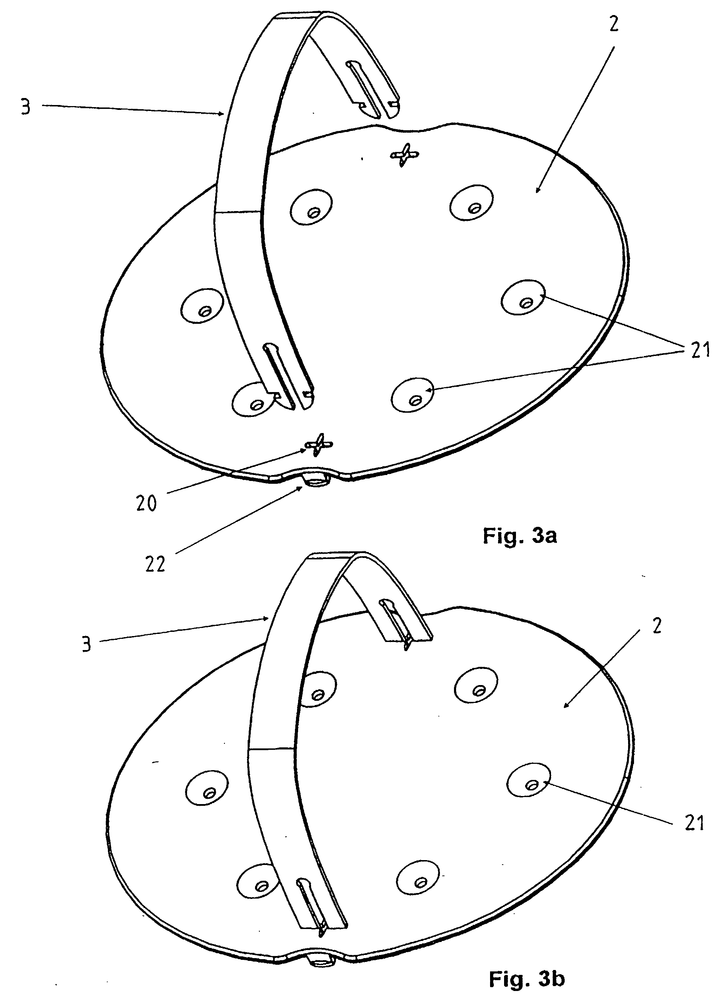

Les deux figures 3a et 3b illustrent d'une manière plus précise l'introduction de la poignée 3. Sur la figure 3a, on remarque les deux orifices 20 spécialement réservés aux extrémités de la poignée 3, orifices dans lesquels vont pouvoir s'insérer par élasticité les deux griffes 32 de la poignée 3. La figure 3b montre la poignée 3 dans sa position solidaire avec la grille 2.

Par ailleurs, les orifices 21 de la grille 2 illustrée dans ces figures correspondent à l'état de la technique.

Dans une autre forme de réalisation de la grille, les orifices disposés sur la périphérie de celle-ci et destinés au passage de la vapeur sont de forme permettant l'introduction des extrémités de la poignée. Ainsi, celle-ci peut être placée dans une quelconque position en fonction de la disponibilité que les aliments en place autorisent.

La figure 4 nous montre en coupe la superposition de la paroi tubulaire 1a d'un élément supérieur et de la paroi tubulaire 1b d'un élément inférieur, ainsi que de l'enclipsage de la grille 2 avec la paroi tubulaire supérieure 1a. La superposition des deux parois est assurée grâce, d'une part aux différences de diamètres permettant l'emboîtement naturel, et d'autre part, par l'appui sur l'épaulement 11 de la paroi supérieure 1a. On remarque un épaulement 10 sur la face intérieure de la paroi 1a qui sert de retenue à la grille 2. La face inférieure de cet épaulement forme une butée 14 est utilisée par une languette 22, montée sous la grille 2, pour bloquer celle-ci dans sa position de travail, tel que bien visible à la figure 4. Cette mise en place est possible par déformation élastique de la languette 22, opération facilitée par la forme inclinée de la face supérieure 13 de l'épaulement 10 à cet endroit. On pourrait également avoir une amorce inclinée inférieure et à demi hauteur pour le déclipsage.

A titre de variante, la butée 14 et la face inclinée 13 peuvent être ménagées sur un épaulement disposé sous l'épaulement 10 prévu pour supporter la grille 2. A titre de variante également, cet épaulement pourrait être prévu sous la grille 2, les languettes élastiques 22 étant issues de la paroi latérale 1, par exemple issues de la face inférieure de l'épaulement 10 et disposées sensiblement verticalement. La butée 14 et la face inclinée 13 peuvent être annulaires, ce qui est bien adapté aux formes rondes. Une ou plusieurs butées avec face supérieure inclinée peuvent également être prévues dans le cas où la position de la ou des languettes est définie, par exemple deux butées avec une face supérieure inclinée sur le petit diamètre d'une ellipse.

Tel que montré à la figure 1, deux languettes 22 sont disposées en vis à vis sur le petit diamètre de la grille 2. Les deux orifices 20 prévus pour le montage de la poignée 3 sont disposés en alignement entre les deux languettes 22.

La vue de dessus de l'élément complet de la figure 5 met en évidence la grille 2 dite à "turbo diffusion" avec ses orifices elliptiques 23 et circulaires 24, offrant une grande surface de passage à la vapeur. On remarque les deux ouvertures 20 réservées à la poignée amovible.

La grille 2 comporte avantageusement de 2,5 à 25% d'ouvertures prévues pour le passage de la vapeur, et de préférence de 15 à 25%. Tel qu'illustré à la figure 5 la grille 2 comporte 25% d'ouvertures.

Ainsi on peut choisir le ou les types de grilles adaptés à chaque type d'aliment. D'autres répartitions et géométries sont envisageables pour les orifices de passage de la vapeur.

Dans le mode de réalisation préféré de l'invention, les fonds ainsi que les parois latérales tubulaires sont réalisés en polycarbonate. D'autres matériaux peuvent être utilisés comme par exemple l'acier inoxydable.

L'invention ne se limite pas aux éléments de forme ovales tels qu'illustrés mais peut s'appliquer à toutes autres formes, par exemple rondes.

A titre de variante on pourrait également envisager des pieds sous la face inférieure de la grille, pour faciliter le posage de la grille, par exemple sur un plat de service afin de présenter un poisson.

La présente invention trouve son application dans les cuiseurs à vapeur, en particulier électriques, comportant une structure de base pour produire la vapeur, surmontée par un récipient de cuisson formé par un ou plusieurs éléments de cuisson à fond amovible.

## Revendications

1. Elément de cuisson pour cuiseur à la vapeur composé d'une paroi latérale tubulaire (1) et d'un fond perforé (2) amovible, la paroi latérale tubulaire (1) comprenant sur son pourtour intérieur un épaulement (10) sur lequel vient s'appuyer le fond perforé (2), **caractérisé en ce qu'**il comporte au moins une butée (14), montée à l'intérieur de la paroi latérale tubulaire (1), respectivement montée sous le fond perforé (2), prévue pour bloquer une languette (22), montée sous le fond perforé (2), respectivement à l'intérieur de la paroi latérale tubulaire (1).

2. Elément de cuisson selon la revendication 1, **caractérisé en ce que** la ou les butées (14), respectivement la ou les languettes, présente(nt) une face inclinée (13) prévue(s) pour repousser la languette (22), respectivement la butée, en correspondance, lors de l'insertion du fond perforé dans la paroi latérale tubulaire.

3. Elément de cuisson selon la revendication 2, **caractérisé en ce que** la butée (14) prévue pour bloquer une ou plusieurs languettes (22) ménagées sous le fond perforé (2) est formée par l'épaulement (10) comportant une face supérieure inclinée (13) prévue pour repousser le rebord extérieur de la ou des languettes.

4. Elément de cuisson selon l'une des revendications 1 à 3, **caractérisé en ce que** le fond perforé (2) est agencé de manière à pouvoir être désolidarisé de la paroi latérale tubulaire (1) par traction sur une poignée (3) montée sur le fond perforé (2).

5. Elément de cuisson selon la revendication 4 **caractérisé en ce que** le fond perforé (2) comporte deux points de montage de la poignée (3) diamétralement alignés avec deux languettes (22), les languettes (22) étant disposées en périphérie des points de montage de la poignée (3).

6. Elément de cuisson selon l'une des revendications 4 ou 5, **caractérisé en ce que** le fond perforé (2) comporte deux orifices (20), prévus pour le montage rapide de la poignée (3) amovible.

7. Elément de cuisson pour cuiseur à la vapeur comportant une paroi latérale tubulaire (1), un fond perforé (2), et une poignée (3) amovible, des orifices (20) adaptés au montage rapide de la poignée (3) étant ménagés dans le fond perforé (2), **caractérisé en ce que** le fond perforé (2) est amovible par rapport à la paroi latérale tubulaire (1) et **en ce que** la poignée (3) comporte deux extrémités présentant chacune une paire de griffes (32) élastiques à bord biseauté, les bords biseautés étant agencés pour coopérer avec les parois des orifices (20) lors de l'insertion des griffes (32) dans lesdits orifices.

8. Elément de cuisson selon la revendication 7, **caractérisé en ce que** l'élément de cuisson présente une forme allongée et **en ce que** les orifices (20) sont disposés à proximité de la périphérie dans la partie du fond perforé (2) présentant la largeur la plus faible.

9. Elément de cuisson selon l'une des revendications 7 ou 8, **caractérisé en ce que** la paroi latérale tubulaire (1) comprend sur son pourtour intérieur inférieur un épaulement (10) sur lequel vient s'appuyer le fond perforé (2).

10. Elément de cuisson selon la revendication 9, **caractérisé en ce qu'**il comporte au moins une butée (14), montée à l'intérieur de la paroi latérale tubulaire (1), respectivement montée sous le fond perforé (2), prévue pour bloquer une languette (22), montée sous le fond perforé (2), respectivement à l'intérieur de la paroi latérale tubulaire (1).

11. Elément de cuisson selon la revendication 10, **caractérisé en ce que** la ou les butées (14), respectivement la ou les languettes, présente(nt) une face inclinée (13) prévue(s) pour repousser la languette (22), respectivement la butée, en correspondance, lors de l'insertion du fond perforé dans la paroi latérale tubulaire.

12. Elément de cuisson selon la revendication 11, **caractérisé en ce que** la butée (14) prévue pour bloquer une ou plusieurs languettes (22) ménagées sous le fond perforé (2) est formée par l'épaulement (10) comportant une face supérieure inclinée (13) prévue pour repousser le rebord extérieur de la ou des languettes.

13. Elément de cuisson selon l'une des revendications 10 à 12, **caractérisé en ce que** le fond perforé (2) comporte deux orifices (20), diamétralement alignés avec deux languettes (22), les languettes (22) étant disposées en périphérie des orifices (20).

14. Elément de cuisson selon l'une des revendications 1 à 13, **caractérisé en ce que** le fond perforé (2) comporte sur au moins 1/10^{e} de sa périphérie une zone exempte de paroi latérale supérieure.

15. Elément de cuisson selon la revendication 14 **caractérisé en ce que** le fond perforé (2) est formé par une grille exempte de paroi latérale supérieure.

16. Elément de cuisson selon l'une des revendications 1 à 15, **caractérisé en ce que** le fond perforé (2) et la paroi latérale tubulaire (1) sont réalisés en polycarbonate.

17. Elément de cuisson selon l'une des revendications 1 à 16, **caractérisé en ce que** le fond perforé (2) comporte une pluralité d'orifices de forme elliptiques et rondes.

18. Elément de cuisson selon l'une des revendications 1 à 17, **caractérisé en ce que** le fond perforé (2) comporte au moins 15% d'orifices de passage de vapeur.

## Claims

1. A cooking element for a steamer, the cooking element being composed of a tubular side wall (1) and a removable perforated bottom wall (2), the inside periphery of the tubular side wall (1) having a shoulder (10) on which the perforated bottom wall (2) rests, the cooking element being **characterized in that** it includes at least one abutment (14) provided to lock a tongue (22), one of the abutment and the tongue being mounted inside the tubular side wall (1), and the other one of the tongue and the abutment being mounted beneath the perforated bottom wall (2).

2. A cooking element according to claim 1, **characterized in that** respective sloping face(s) (13) is/are provided either on the abutment(s) (14) or on the tongue(s) (22) to push back the corresponding tongue(s) or abutment(s) during insertion of the perforated bottom wall into the tubular side wall.

3. A cooking element according to claim 2, **characterized in that** the abutment (14) provided to lock one or more tongues (22) located beneath the perforated bottom wall (2) is formed by the shoulder (10) having a sloping top face (13) designed to push back the outside edge(s) of the tongue(s).

4. A cooking element according to any one of claims 1 to 3, **characterized in that** the perforated bottom wall (2) is arranged in such a manner as to be capable of being separated from the tubular side wall (1) by pulling on a handle (3) mounted on the perforated bottom wall (2).

5. A cooking element according to claim 4, **characterized in that** the perforated bottom wall (2) has two mounting points for the handle (3) in diarnetral alignment with two tongues (22), the tongues (22) being disposed peripherally of the mounting points for the handle (3).

6. A cooking element according to claim 4 or claim 5, **characterized in that** the perforated bottom wall (2) has two orifices (20) provided for quick mounting of the removable handle (3).

7. A cooking element for a steamer, the cooking element comprising a tubular side wall (1), a perforated bottom wall (2), and a removable handle (3), orifices (20) adapted for quick mounting of the handle (3) being provided in the perforated bottom wall (2), the cooking element being **characterized in that** the perforated bottom wall (2) is removable relative to the tubular side wall (1), and **in that** the handle (3) has two ends each presenting a pair of resilient claws (32) with chamfered edges, the chamfered edges being arranged to cooperate with the walls of the orifices (20) while the claws (32) are being inserted into said orifices.

8. A cooking element according to claim 7, **characterized in that** the cooking element presents an elongate shape and **in that** the orifices (20) are disposed close to the periphery in the portion of the perforated bottom wall (2) that is of small width.

9. A cooking element according to claim 7 or claim 8, **characterized in that** the bottom inside periphery of the tubular side wall (1) has a shoulder (10) on which the perforated bottom wall (2) rests.

10. A cooking element according to claim 9, **characterized in that** it includes at least one abutment (14) provided to lock a tongue (22), one of the abutment and the tongue being mounted inside the tubular side wall (1), and the other one of the tongue and the abutment being mounted beneath the perforated bottom wall (2).

11. A cooking element according to claim 10, **characterized in that** respective sloping face(s) (13) is/are provided on either the abutment(s) (14) or the tongue(s) to push back the corresponding tongue(s) (22) or abutment(s) during insertion of the perforated bottom wall into the tubular side wall.

12. A cooking element according to claim 11, **characterized in that** the abutment (14) provided to lock one or more tongues (22) located beneath the perforated bottom wall (2) is formed by the shoulder (10) having a sloping top face (13) designed to push back the outside edge(s) of the tongue(s).

13. A cooking element according to any one of claims 10 to 12, **characterized in that** the perforated bottom wall (2) has two orifices (20) diametrally aligned with the two tongues (22), the tongues (22) being disposed peripherally of the orifices (20).

14. A cooking element according to any one of claims 1 to 13, **characterized in that** the perforated bottom wall (2) includes a zone with no top side wall over at least one-tenth of its periphery.

15. A cooking element according to claim 14, **characterized in that** the perforated bottom wall (2) is formed by a grid with no top side wall.

16. A cooking element according to any one of claims 1 to 15, **characterized in that** the perforated bottom wall (2) and the tubular side wall (1) are made of polycarbonate.

17. A cooking element according to any one of claims 1 to 16, **characterized in that** the perforated bottom wall (2) has a plurality of orifices of elliptical and round shape.

18. A cooking element according to any one of claims 1 to 17, **characterized in that** the perforated bottom wall (2) comprises at least 15% orifices for passing steam.

## Patentansprüche

1. Kochelement für einen Dampfkocher, gebildet aus einer rohrförmigen Seitenwand (1) und einem entnehmbaren Lochboden (2), wobei die rohrförmige Seitenwand (1) an ihrem inneren Umfang eine Schulter (10) aufweist, an der sich der Lochboden (2) abstützt, **dadurch gekennzeichnet, daß** es wenigstens einen Anschlag (14) aufweist, der innerhalb der rohrförmigen Seitenwand (1) oder unter dem Lochboden (2) angebracht und dazu vorgesehen ist, eine Zunge (22), die unter dem Lochboden (2) bzw. innerhalb der rohrförmigen Seitenwand (1) angebracht ist, zu blockieren.

2. Kochelement nach Anspruch 1, **dadurch gekennzeichnet, daß** der Anschlag (die Anschläge) (14) bzw. die Zunge(n) eine geneigte Fläche (13) aufweist (aufweisen), die dazu vorgesehen ist (sind), die Zunge (22) bzw. den Anschlag entsprechend beim Einschieben des Lochbodens in die rohrförmige Seitenwand zurückzuschieben.

3. Kochelement nach Anspruch 2, **dadurch gekennzeichnet, daß** der Anschlag (14), der dazu vorgesehen ist, eine oder mehrere unter dem Lochboden (2) ausgebildete Zungen (22) zu blockieren, durch eine Schulter (10) gebildet ist, die eine geneigte obere Fläche (13) aufweist, die dazu vorgesehen ist, den äußeren Rand der Zunge(n) zurückzuschieben.

4. Kochelement nach einem der Ansprüche 1 bis 3, **dadurch gekennzeichnet, daß** der Lochboden (2) so beschaffen ist, daß er von der rohrförmigen Seitenwand (1) durch Ziehen an einem an dem Lochboden (2) angebrachten Griff (3) gelöst werden kann.

5. Kochelement nach Anspruch 4, **dadurch gekennzeichnet, daß** der Lochboden (2) zwei Montagepunkte für den Griff (3) aufweist, die auf zwei Zungen (22) diametral ausgerichtet sind, wobei die Zungen (22) am Umfang der Montagepunkte für den Griff (3) angeordnet sind.

6. Kochelement nach einem der Ansprüche 4 oder 5, **dadurch gekennzeichnet, daß** der Lochboden (2) zwei Öffnungen (20) aufweist, die für die schnelle Montage des lösbaren Griffs (3) vorgesehen sind.

7. Kochelement für Dampfkocher, umfassend eine rohrförmige Seitenwand (1), einen Lochboden (2) und einen lösbaren Griff(3), wobei Öffnungen (20), die für eine schnelle Montage des Griffs (3) geeignet sind, in dem Lochboden (2) ausgebildet sind, **dadurch gekennzeichnet, daß** der Lochboden (2) in bezug auf die rohrförmige Seitenwand (1) entnehmbar ist und daß der Griff (3) zwei Enden aufweist, die jeweils ein Paar elastischer Haken (32) mit abgefastem Rand aufweisen, wobei die abgefasten Ränder so beschaffen sind, daß sie mit den Wänden der Öffnungen (20) zusammenwirken, wenn die Haken (32) in die Öffnungen eingeschoben sind.

8. Kochelement nach Anspruch 7, **dadurch gekennzeichnet, daß** das Kochelement eine längliche Form aufweist und daß die Öffnungen (20) in der Nähe des Umfangs in jenem Teil des Lochbodens (2), der die geringste Breite aufweist, angeordnet sind.

9. Kochelement nach einem der Ansprüche 7 oder 8, **dadurch gekennzeichnet, daß** die rohrförmige Seitenwand (1) an ihrem unteren, inneren Umfang eine Schulter (10) aufweist, auf der sich der Lochboden (2) abstützt.

10. Kochelement nach Anspruch 9, **dadurch gekennzeichnet, daß** es wenigstens einen Anschlag (14) umfaßt, der innerhalb der rohrförmigen Seitenwand (1) oder unter dem Lochboden (2) angebracht und dazu vorgesehen ist, eine Zunge, die unter dem Lochboden (2) bzw. innerhalb der rohrförmigen Seitenwand (1) angebracht ist, zu blockieren.

11. Kochelement nach Anspruch 10, **dadurch gekennzeichnet, daß** der Anschlag (die Anschläge) (14) bzw. die Zunge(n) eine geneigte Fläche (13) aufweist (aufweisen), die dazu vorgesehen ist (sind), die Zunge (22) bzw. den Anschlag entsprechend beim Einschieben des Lochbodens in die rohrförmige Seitenwand zurückzuschieben.

12. Kochelement nach Anspruch 11, **dadurch gekennzeichnet, daß** der Anschlag (14), der dazu vorgesehen ist, eine oder mehrere unter dem Lochboden (2) ausgebildete Zungen (22) zu blockieren, durch eine Schulter (10) gebildet ist, die eine geneigte obere Fläche (13) aufweist, die dazu vorgesehen ist, den äußeren Rand der Zunge(n) zurückzuschieben.

13. Kochelement nach einem der Ansprüche 10 bis 12, **dadurch gekennzeichnet, daß** der Lochboden (2) zwei Öffnungen (20) umfaßt, die auf die zwei Zungen (22) diametral ausgerichtet sind, wobei die Zungen (22) am Umfang der Öffnungen (20) angeordnet sind.

14. Kochelement nach einem der Ansprüche 1 bis 13, **dadurch gekennzeichnet, daß** der Lochboden (2) wenigstens auf 1/10 seines Umfangs eine Zone aufweist, die frei von der oberen Seitenwand ist.

15. Kochelement nach Anspruch 14, **dadurch gekennzeichnet, daß** der Lochboden (2) durch ein Gitter gebildet ist, das frei von der oberen Seitenwand ist.

16. Kochelement nach einem der Ansprüche 1 bis 15, **dadurch gekennzeichnet, daß** der Lochboden (2) und die rohrförmige Seitenwand (1) aus Polycarbonat hergestellt sind.

17. Kochelement nach einem der Ansprüche 1 bis 16, **dadurch gekennzeichnet, daß** der Lochboden (2) mehrere Öffnungen mit elliptischer und runder Form aufweist.

18. Kochelement nach einem der Ansprüche 1 bis 17, **dadurch gekennzeichnet, daß** der Lochboden (2) wenigstens 15 % Dampfdurchlaßöffnungen aufweist.
